(19) Europäisches Patentamt
European Patent Office
Office européen des brevets

(11) **EP 1 911 506 B1**

(12) **EUROPÄISCHE PATENTSCHRIFT**

(45) Veröffentlichungstag und Bekanntmachung des Hinweises auf die Patenterteilung:
**19.08.2009 Patentblatt 2009/34**

(51) Int Cl.:
**B01D 53/94** (2006.01) **B01J 23/63** (2006.01)
**B01J 23/00** (2006.01)

(21) Anmeldenummer: **06020994.7**

(22) Anmeldetag: **06.10.2006**

(54) **Stickoxidspeicherkatalysator mit abgesenkter Entschwefelungstemperatur**

Nitrogen oxide storage catalyst with reduced desulphurisation temperature

Catalyseur accumulateur de NOx avec une température de désulfuration réduite

(84) Benannte Vertragsstaaten:
**AT BE BG CH CY CZ DE DK EE ES FI FR GB GR HU IE IS IT LI LT LU LV MC NL PL PT RO SE SI SK TR**

(43) Veröffentlichungstag der Anmeldung:
**16.04.2008 Patentblatt 2008/16**

(73) Patentinhaber: **Umicore AG & Co. KG**
**63457 Hanau-Wolfgang (DE)**

(72) Erfinder:
• **Grißtede, Ina, Dr.**
**63450 Hanau (DE)**
• **Rohr, Friedemann, Dr.**
**63452 Hanau (DE)**
• **Eckhoff, Stephan, Dr.**
**63755 Alzenau (DE)**
• **Müller, Wilfried, Dipl.-Ing.**
**61184 Karben (DE)**
• **Kreuzer, Thomas, Dr.**
**61184 Karben (DE)**

(56) Entgegenhaltungen:
EP-A- 1 317 953 DE-A1- 10 308 287
US-A1- 2005 164 879

**Beschreibung**

Die Erfindung betrifft_ein Verfahren zur Herstellung eines Stickoxidspeicherkatalysators mit abgesenkter Entschwefelungstemperatur und einen Stickoxidspeicherkatalysator mit abgesenkter Entschwefelungstemperatur.

Stickoxidspeicherkatalysatoren werden zur Entfernung der im Abgas von überwiegend mager betriebenen Verbrennungsmotoren enthaltenen Stickoxide verwendet. Ihre Arbeitsweise wird ausführlich in der SAE-Schrift SAE 950809 beschrieben. Die Reinigungswirkung der Stickoxidspeicherkatalysatoren beruht darauf, daß in einer mageren Betriebsphase des Motors die Stickoxide vom Speichermaterial des Speicherkatalysators vorwiegend in Form von Nitraten gespeichert werden, und in einer darauffolgenden fetten Betriebsphase des Motors die zuvor gebildeten Nitrate zersetzt und die wieder freiwerdenden Stickoxide mit den reduzierenden Abgasanteilen am Speicherkatalysator zu Stickstoff, Kohlendioxid und Wasser umgesetzt werden. Zu den überwiegend mager betriebenen Verbrennungsmotoren gehören neben den direkteinspritzenden Benzinmotoren mit geschichteter Gemischbildung im Zylinder vor allem auch Dieselmotoren.

Stickoxidspeicherkatalysatoren bestehen häufig aus einem Katalysatormaterial, welches zumeist in Form einer Beschichtung auf einem inerten Tragkörper aus Keramik oder Metall aufgebracht ist.

Das Katalysatormaterial des Stickoxidspeicherkatalysators enthält wenigstens ein Stickoxidspeichermaterial und eine katalytisch aktive Komponente. Das Stickoxidspeichermaterial wiederum besteht aus der eigentlichen Stickoxidspeicherkomponente, die auf einem Trägermaterial in hochdisperser Form abgeschieden ist.

Als Speicherkomponenten werden vorwiegend die basischen Oxide der Alkalimetalle, der Erdalkalimetalle und der Seltenerdmetalle eingesetzt, welche mit Stickstoffdioxid zu den entsprechenden Nitraten reagieren. Es ist bekannt, daß diese Materialien an Luft zum überwiegenden Teil in Form von Carbonaten und Hydroxiden vorliegen. Diese Verbindungen eignen sich ebenfalls zur Speicherung der Stickoxide. Wenn daher im Rahmen der Erfindung von den basischen Speicheroxiden gesprochen wird, so sind damit auch die entsprechenden Carbonate und Hydroxide eingeschlossen.

Geeignete Trägermaterialien für die Speicherkomponenten sind temperaturstabile Metalloxide mit hoher Oberfläche von mehr als 10 $m^2$/g, die eine hochdisperse Abscheidung der Speicherkomponenten ermöglichen. Geeignet sind beispielsweise Ceroxid und Cer-haltige Mischoxide, Aluminiumoxid, Magnesiumoxid, Magnesium-Aluminium-Mischoxide, Seltene Erden und einige ternäre Oxide.

Die im Katalysatormaterial des Stickoxidspeicherkatalysators enthaltenen katalytisch aktiven Komponenten haben die Aufgabe, die im mageren Abgas enthaltenen Schadgase Kohlenmonoxid und Kohlenwasserstoffe zu Kohlendioxid und Wasser umzusetzen. Außerdem dienen sie dazu, das im Abgas enthaltene Stickstoffmonoxid zu Stickstoffdioxid zu oxidieren, damit es mit dem basischen Speichermaterial zu Nitraten reagieren kann. Zu diesem Zweck werden meist die Edelmetalle der Platingruppe, insbesondere Platin, verwendet, die in der Regel getrennt von den Speicherkomponenten auf einem separaten Trägermaterial abgeschieden werden. Als Trägermaterial für die Platingruppenmetalle werden in Stickoxidspeicherkatalysatoren häufig hochoberflächige Oxide eingesetzt, die eine deutliche Basizität aufweisen können.

So beschreibt beispielsweise EP 1 317 953 A1 der Anmelderin einen Stickoxidspeicherkatalysator, der neben Stickoxidspeicherkomponenten eine oxidationsaktive Komponente, wie zum Beispiel Platin, auf einem Trägermaterial enthält. Die ausgezeichneten Eigenschaften des in dieser Anmeldung beschriebenen Stickoxidspeicherkatalysators bezüglich der Breite des Temperaturfensters, des Speicherwirkungsgrades und der Alterungsstabilität beruhen wesentlich auf dem für das Platin verwendeten Trägermaterial aus einem homogenen Mg/Al-Mischoxid, das Magnesiumoxid in einer Konzentration von 1 bis 40 Gew.-%, bezogen auf das Gesamtgewicht des Mg/Al-Mischoxids, enthält und in einer weiteren vorteilhafte Ausgestaltung zusätzlich mit Ceroxid oder Praseodymoxid dotiert sein kann. Die WO 2005/092481 der Anmelderin beschreibt einen weitereren Stickoxidspeicherkatalysator, der sich von dem in der EP 1 317 953 A1 beschriebenen durch ein verbessertes Stickoxidspeichermaterial unterscheidet.

EP 1 016 448 B1 beschreibt einen Katalysator für die Reinigung von mageren Abgasen, der ein Verbundstoffträgeroxid aus Erdalkalioxid und Aluminiumoxid mit einer darauf aufgebrachten Platinstrukturschicht enthält, wobei die Platincluster in einer Matrix aus Erdalkalimetalloxid gleichmäßig dispergiert sind.

EP 1 321 186 B1 beschreibt einen Stickoxidspeicherkatalysator, in dem das katalytisch aktive Edelmetall, beispielsweise Platin, auf einem oxidischen Trägermaterial oder direkt auf dem $NO_x$-Adsorbens aufgebracht sein kann.

Werden solche Stickoxidspeicherkatalysatoren zur Abgasnachbehandlung in Dieselfahrzeugen eingesetzt, so ist zu beachten, daß selbst der sogenannte schwefelarme Dieselkraftstoff mit maximal 50 ppm noch etwa fünfmal soviel Restschwefel enthält wie Benzin. Dieser liegt zumeist in organischen Schwefelverbindungen vor und wird im Brennraum des Motors überwiegend zu Schwefeldioxid $SO_2$ umgesetzt, das dann mit dem Abgas zum Stickoxidspeicherkatalysator gelangt. In Analogie zum Speichermechanismus für Stickoxide wird $SO_2$ an der katalytisch aktiven Komponente zu $SO_3$ oxidiert und dann unter Bildung der korrespondierenden Sulfate in das Stickoxidspeichermaterial eingelagert. Mit zunehmender Einlagerung der Stickoxide und Schwefeloxide ins Speichermaterial nimmt die Speicherkapazität des Materials ab. Die durch die Einlagerung von Stickoxiden gebildeten Nitrate können durch die kurzzeitige Anfettung des

Abgases zu Stickoxiden $NO_x$ zersetzt und unter Verwendung von Kohlenmonoxid, Wasserstoff und Kohlenwasserstoffen als Reduktionsmittel zu Stickstoff unter Bildung von Wasser und Kohlendioxid reduziert werden. Da die durch die Einlagerung der Schwefeloxide gebildeten Sulfate thermisch stabiler sind als die entsprechenden Nitrate, führt die Speicherung von Schwefeloxiden bei normalen Betriebsbedingungen zu einer Vergiftung des Stickoxidspeicherkatalysators, die auch bei reduzierenden Abgasbedingungen in der Regel erst bei hohen Temperaturen, d.h. oberhalb von 600°C reversibel ist. Dies gilt auch für sogenannte "Schwefel-tolerante" Stickoxidspeicherkatalysatoren, wie sie zum Beispiel in der EP 1 304 156 A1 beschrieben werden. Zur Entschwefelung solcher Katalysatoren werden in der Regel Abgastemperaturen von mehr als 600°C erzeugt und abwechselnd reduzierende und leicht oxidierende Abgasbedingungen eingestellt. Ein solcher Entschwefelungsvorgang kann mehrere Minuten in Anspruch nehmen und ist häufig nur im Vollast-nahen Betrieb des Motors möglich.

US 2005/0164879 A1 beschreibt einen mehrschichtigen Katalysator, der eine Schwefeloxide absorbierende Beschichtung vor oder über einer Stickoxide absorbierenden Beschichtung, und/oder Dreiwegekatalysator-Beschichtung enthält. Das zu reinigende Abgas muß, bevor es mit der Stickoxide speichernden Beschichtung oder der Dreiwegekatalytischen Beschichtung in Kontakt kommt, zunächst diese Schwefeloxide absorbierende Beschichtung passieren. Dabei werden die Schwefeloxide aus dem Abgas selektiv und reversibel von der Schwefeloxide absorbierenden Beschichtung aufgenommen und die Schwefelvergiftung, des nachgeordneten Stickoxidspeichermaterials verhindert oder gemildert.

In Dieselfahrzeugen, deren Abgasreinigungsanlage außer einem Stickoxidspeicherkatalysator noch einen motornahen Dieseloxidationskatalysator und einen Dieselpartikelfilter enthält, kann es vorteilhaft sein, den Dieselpartikelfilter unmittelbar hinter dem Dieseloxidationskatalysator in Motornähe anzuordnen, so daß der Stickoxidspeicherkatalysator abströmseitig des Dieselpartikelfilters im Unterbodenbereich des Fahrzeugs untergebracht werden muß. Dadurch kann beispielsweise während der Dieselpartikelfilterregeneration das Erreichen der Rußzündtemperatur erleichtert werden. Da die Anfettung zur $NO_x$-Regeneration des Stickoxidspeicherkatalysators beim Dieselfahrzeug in der Regel durch Kraftstoffnacheinspritzung erfolgt, hat eine solche Anordnung den Vorteil, daß Exothermen, die zu Beginn der $NO_x$-Regenerationsphasen durch die Oxidation von unverbranntem Kraftstoff entstehen können, am Stickoxidspeicherkatalysator vermieden werden. Allerdings ist es in einer solchen Anordnung nicht möglich, Temperaturen von mehr als 600°C zu erzeugen, wie sie zur Entschwefelung von herkömmlichen Stickoxidspeicherkatalysatoren benötigt werden.

Es ist daher Aufgabe der vorliegenden Erfindung, ein Verfahren zur Verfügung zu stellen, mit dem die Entschwefelungstemperatur eines Stickoxidspeicherkatalysators, der eine Platinkomponente und wenigstens ein Stickoxidspeichermaterial enthält, wobei die Platinkomponente aus Platin auf einem hochoberflächigen, hochschmelzenden, oxidischen Trägermaterial A besteht und das Stickoxidspeichermaterial wenigstens eine Stickoxidspeicherkomponente auf einem oder mehreren hochschmelzenden, oxidischen Trägermaterialien umfaßt, gesenkt werden kann. Diese Aufgabe wird durch ein Verfahren zur Herstellung_ eines Stickoxidspeicherkatalysators mit abgesenkter Entschwefelungstemperatur ausgehen von der Rezeptur eines Stickoxidspeicherkatalysators nach dem beschriebenen Stand der Technik gelöst. Das Verfahren ist dadurch gekennzeichnet, daß mindestens ein Drittel der eingesetzten Platinmenge auf einem hochschmelzenden, hochoberflächigen, oxidischen Trägermaterial B aufgebracht wird, wobei das Trägermaterial B weniger basisch ist als das Trägermaterial A. Dadurch wird die Basizität der chemischen Umgebung des Platins insgesamt abgesenkt.

In einer bevorzugten Ausführungsform des Verfahrens wird die Hälfte der eingesetzten Menge des Platins auf dem weniger basischen Trägermaterial B aufgebracht.

Daß die Absenkung der Basizität der chemischen Umgebung des Platins zu einem verbesserten Entschwefelungsverhalten führt, obwohl mit dieser Maßnahme keine Veränderungen am Stickoxidspeichermaterial vorgenommen werden, ist das überraschende Ergebnis intensiver Optimierungsarbeiten der Anmelderin zur Absenkung der Entschwefelungstemperatur herkömmlicher Stickoxidspeicherkatalysatoren. Ohne Anspruch darauf, eine wissenschaftlich fundierte Lehre zu begründen, wird vermutet, daß dem beobachteten Effekt der im folgende beschriebene Wirkmechanismus zugrunde liegt:

Trifft im Brennraum des Motors erzeugtes Schwefeldioxid $SO_2$ auf die Oberfläche des Stickoxidspeicherkatalysators, so wird es in magerer Atmosphäre zunächst am Platin zu $SO_3$ oxidiert. Um an einem Platin-Reaktionszentrum umgesetzt zu werden, muß das saure Schadgas zunächst an einer basischen Komponente adsorbiert werden und zu einem Pt-Reaktionszentrum weitergeleitet werden. Die Adsorption des $SO_2$ kann direkt an der Stickoxidspeicherkomponente oder an dem basischen Trägeroxid des Platins erfolgen. In jedem Fall übernimmt das basische Trägermaterial eine Verankerungsrolle beim Transport des $SO_2$-Moleküls zum reaktiven Zentrum am Platin. Dort erfolgt dann die Oxidation von $SO_2$ zu $SO_3$. Dieses $SO_3$ wird wiederum ohne vollständige Desorption von der Adsorptionstelle am Platin ggf. über das basische Platinträgeroxid zur Stickoxidspeicherkomponente "weitergeleitet" und von dieser unter Bildung des korrespondierenden Sulfats eingespeichert.

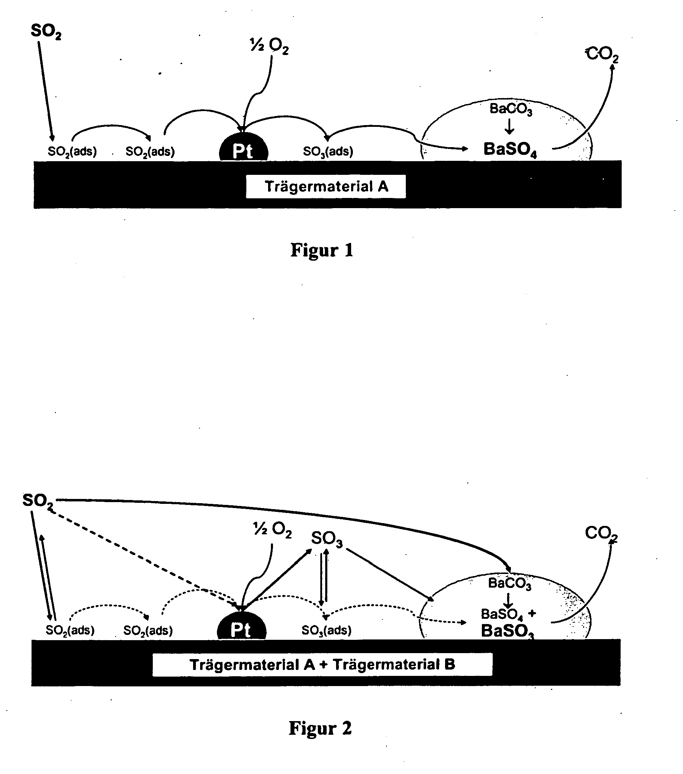

Figur 1 zeigt schematisch den angenommen Einlagerungsschritt am Beispiel eines Stickoxidspeicherkatalysators mit Barium-basierter Stickoxidspeicherkomponente.

Wird ein wesentlicher Teil des basischen Trägermaterials des Platins durch ein weniger basisches Trägermaterial ersetzt, so hat dies vermutlich zur Folge, daß einerseits die Adsorptionsraten des $SO_2$ vermindert werden, andererseits die Weiterleitungsprozesse der Schwefeloxide sowohl hin zum Pt-Reaktionszentrum als auch zur Stickoxidspeicherkomponente dadurch behindert werden, daß die "Verankerungswirkung" der Oberfläche gegenüber den Schwefeloxiden vermindert wird. Infolgedessen wird nicht mehr der gesamte $SO_2$-Antei im Abgas zu $SO_3$ oxidiert beziehungsweise "weitergereicht". Die Einlagerung des im Abgas verbleibenden $SO_2$ im Stickoxidspeichermaterial führt zu resultierenden Sulfiten, die in der Fettphase leichter zu Sulfiden reduziert werden können als Sulfate. Die Sulfite und Sulfide der typischen Stickoxidspeicherkomponenten sind in der Regel thermodynamisch weniger stabil als die aus der Einlagerung von $SO_3$ resultierenden Sulfate und können bei moderateren Temperaturen wieder zersetzt werden. Infolgedessen vermindert sich die Entschwefelungstemperatur des Katalysators.

Figur 2 zeigt schematisch den angenommen Einlagerungsschritt beispielhaft für die Verwendung einer Barium-basierten Stickoxidspeicherkomponente bei herabgesetzter Basizität der chemischen Umgebung des Platins. Dabei zeigen die durchgezogenen Linien die vermutlich überwiegend auftretenden Reaktionswege der Schwefeloxide.

Die Absenkung der Basizität der chemischen Umgebung des Platins vermindert also möglicherweise die $SO_2$-Oxidationsraten am Platin und erschwert die Weiterleituhgsprozesse der Schwefeloxide auf der Oberfläche des Katalysators und führt so, wie beschrieben, zur Absenkung der Entschwefelungstemperatur desselben.

Die Trägerung von mindestens einem Drittel, bevorzugt der Hälfte der eingesetzten Platinmenge auf einem zweiten, weniger basischen Trägermaterial kann unter Umständen Einfluß auf die Stickoxidspeichereffizienz haben. Es gehört daher zu den vorteilhaften Ausgestaltungen der Erfindung, wenn das weniger basische Trägermaterial B im Vergleich zu dem basischeren Trägermaterial A im Unterschuß eingesetzt wird, wobei sich die erforderliche Menge des weniger basischen Trägermaterials B an der Zieltemperatur orientiert, auf die die Entschwefelungstemperatur abgesenkt werden soll. Bevorzugt liegt das Verhältnis zwischen den Trägermaterialien A : B im Bereich 1,5 : 1 bis 5 : 1.

Je nach Art des zur Absenkung der Basizität der chemischen Umgebung des Platins verwendeten Trägermaterials kann diese Maßnahme eine leichte Destabilisierung der Platindispersion und dadurch bedingt leichte Verluste der Stickoxidspeichereffizienz insbesondere im Tieftemperaturbereich bis 350°C zur Folge haben. Der Speichereffizienz im Tieftemperaturbereich bis 350°C kommt jedoch für die eingangs beschriebenen Anwendungen bei Dieselfahrzeugen besondere Bedeutung zu, so daß dies gegebenenfalls durch geeignete Maßnahmen ausgeglichen werden muß.

In einer bevorzugten Ausführungsform des Verfahrens wird der durch Absenkung der Basizität der chemischen Umgebung entstandenen neuen Stickoxidspeicherkatalysatorformulierung deshalb ein Ceroxid, ein Cer-Zirkon-Mischoxid oder ein mit Seltenen Erden dotiertes Ceroxid oder Kombinationen davon in ausreichender Menge, d.h. mit mindestens 5 Gew.-%, bezogen auf die Gesamtmenge der katalytisch aktiven Komponenten, zugesetzt. Da Ceroxid zum einen insbesondere im Temperaturbereich zwischen 150°C und 300°C über die Fähigkeit zur Stickoxidspeicherung verfügt, zum anderen in diesem Temperaturbereich durch die dem Material eigene Sauerstoffspeicherfähigkeit unterstützend in den Prozeß der NO-Oxidation zu $NO_2$ eingreifen kann, der Voraussetzung für eine effektive Stickoxidspeicherung ist, bewirkt die Zugabe der Ceroxidkomponente in ausreichender Menge mindestens den Erhalt, gegebenenfalls eine Verbesserung der Tieftemperaturspeichereffizienz. Die Tatsache, das Ceroxid unter mageren Bedingungen im Temperaturbereich auch Schwefeloxide einlagern kann, wirkt sich nach Erfahrungen der Anmelderin nicht nachteilig auf die Entschwefelungscharakteristik der entsprechenden Stickoxidspeicherkatalysatoren aus, da das resultierende Cer(III)sulfat unter reduzierenden Bedingungen in der Fettphase bereits bei moderaten Temperaturen wieder zersetzt werden kann.

Das beschriebene Verfahren stellt eine technische Lehre dar, die auf alle Stickoxidspeicherkatalysatoren angewandt werden kann, die sich dadurch auszeichnen, daß sie eine Platinkomponente bestehend aus Platin auf einem hochoberflächigen, hochschmelzenden, oxidischen Trägermaterial und wenigstens eine Stickoxidspeicherkomponente auf einem oder mehreren hochschmelzenden, oxidischen Trägermaterialien enthalten. Ausgehend von einem Stickoxidspeicherkatalysator nach dem beschriebenen Stand der Technik erhält man durch Anwendung des beschriebenen Verfahrens in seinen bevorzugten Ausgestaltungen einen verbesserten Stickoxidspeicherkatalysator mit abgesenkter Entschwefelungstemperatur, der dadurch gekennzeichnet ist, daß das Platin jeweils zur Hälfte auf einem stark basischen Trägermaterial und zur anderen Hälfte auf einem weniger basischen Trägermaterial aufgebracht ist. Zusätzlich enthält dieser verbesserte Stickoxidspeicherkatalysator mindestens 5 Gew.-% Ceroxid oder Cer-Zirkon-Mischoxid oder ein mit Seltenen Erden dotiertes Ceroxid oder Kombinationen davon, bezogen auf die Gesamtmenge der katalytisch aktiven Komponenten.

Ausgehend von der in der EP 1 317 953 A1 der Anmelderin beschriebenen Katalysatorformulierung erhält man eine besonders bevorzugte Variante des Stickoxidspeicherkatalysators, in dem das Platin zur Hälfte auf einem homogenen Mg/A1-Mischoxid aufgebracht ist, wobei das Magnesiumoxid in einer Konzentration von 5 bis 28 Gew.-%, insbesondere von 10 bis 25 Gew.-%, bezogen auf das Gesamtgewicht des Mg/Al-Mischoxids, vorliegt. Ein solches homogenes Mg/Al-Mischoxid zeigt vor allem dann hervorragende Eigenschaften für den Einsatz als Platinträgermaterial in Stickoxidspeicherkatalysatoren, wenn es mit einem Selten-Erd-Oxid ausgewählt aus der Gruppe Yttriumoxid, Lanthanoxid, Ceroxid, Praseodymoxid oder Neodymoxid oder Kombinationen davon belegt ist. Bezüglich der Definition des Begriffes "homogenes Mischoxids", Erläuterungen zu den bevorzugten Materialvarianten, dem technischen Hintergrund und dem zugrundeliegenden Stand der Technik sei auf die zitierte Anmeldeschrift EP 1 317 953 A1 verwiesen.

Liegt als stark basisches Ausgangsträgermaterial für Platin ein homogenes Mg/A1-Mischoxid wie in der EP 1 317 953 A1 beschrieben vor, so entsteht ein bevorzugter Katalysator mit abgesenkter Entschwefelungstemperatur durch die Trägerung der Hälfte des Platins auf einem hochoberflächigen, temperaturstabilen Alumininoxid. In einer besonders bevorzugten Ausführungsform ist dieses Aluminiumoxid mit einem Selten-Erd-Oxid ausgewählt aus der Gruppe bestehend aus Yttriumoxid, Lanthanoxid, Ceroxid, Praseodymoxid oder Neodymoxid oder Kombinationen davon belegt. Auch in dieser Form belegte Aluminiumoxid-Varianten zeigen in der Regel noch geringere Basizitäten als die homogenen Mg/Al-Mischoxide, da der amphotere Charakter des Aluminiumoxids dominiert. So zeigt beispielsweise ein typisches Mg/Al-Mischoxid bei Suspension in Wasser einen resultierenden pH-Wert, der zwischen 9 und 10 liegt, während ein mit 10 bis 20 Gew.-% Selten-Erd-Oxid bezogen auf das Gesamtgewicht belegtes Aluminiumoxid bei Suspension in Wasser einen resultierenden pH-Wert von 7 bis 8 aufweist.

Als Stickoxid-Speicherkomponenten für den erfindungsgemäßen Katalysator können Oxide, Carbonate oder Hydroxide von Magnesium, Calcium, Strontium, Barium, den Alkalimetallen, den Seltenerdmetallen oder Mischungen davon eingesetzt werden. Als Trägermaterial für diese Komponenten eignen sich temperaturstabile Metalloxide, deren Schmelzpunkt oberhalb der im Verfahren auftretenden Temperaturen liegt. Diese Metalloxide werden bevorzugt ausgewählt aus der Gruppe bestehend aus Ceroxid, Mischoxiden des Cers, Aluminiumoxid, Magnesiumoxid, einem homogenen Mg/Al-Mischoxid mit 5 bis 28 Gew.-% Magnesiumoxid bezogen auf das Gesamtgewicht des Mg/Al-Mischoxids, Calciumtitanat, Strontiumtitanat, Bariumtitanat, Bariumaluminat, Bariumzirkonat, Yttriumoxid, Lanthanoxid, Praseodymoxid, Samariumoxid, Neodymoxid, und Lanthanmanganat oder Mischungen davon.

Besonders vorteilhaft ist die Verwendung von Strontium oder Barium als StickoxidSpeicherkomponenten, die auf einem Trägermaterial aus Ceroxid oder Mischoxiden des Cers fixiert sind. Gut geeignet als Trägermaterial für die Stickoxid-Speicherkomponenten ist ein Mischoxid des Cers, insbesondere ein Cer/Zirkon-Mischoxid mit einem Zirkonoxidgehalt von 1 bis 25 Gew.-%, bezogen auf das Gesamtgewicht des Mischoxids. Das Mischoxid kann zusätzlich mit 0,5 bis 90 Gew.-% mindestens eines Oxids eines Elementes aus der Gruppe gebildet aus Zirkon, Silicium, Scandium, Yttrium, Lanthan und den Seltenerdmetallen oder Mischungen davon, bezogen auf das Gesamtgewicht des Speichermaterials, dotiert sein. Bevorzugt erfolgt eine Dotierung des Cer/Zirkon-Mischoxids mit 0,5 bis 10 Gew.-% Lanthan- und/oder Praseodymoxid, bezogen auf das Gesamtgewicht von Cer/Zirkon-Mischoxid und Lanthan- und/oder Praseodymoxid.

Neben Platin kann der erfindungsgemäße Stickoxidspeicherkatalysator ein weiteres Edelmetall ausgewählt aus der Gruppe Ruthenium, Rhodium, Palladium, Iridium, Gold oder Kombinationen davon enthalten. Eine besonders gute Stickoxidspeichereffizienz kann erreicht werden, wenn Palladium oder Rhodium neben Platin auf dem homogenen Mg/Al-Mischoxid und/oder auf dem Aluminiumoxid aufgebracht wird, da die wechselseitige Legierung der Edelmetalle zu einer Stabilisierung der Dispersion gegenüber thermischer Sinterung führen kann.

Um eine möglichst vollständige Reduktion der desorbierten Stickoxide während der $NO_x$-Regenerationphase zur erreichen, ist es weiterhin vorteilhaft, dem Katalysator ein weiteres Trägermaterial hinzuzufügen, auf welchem Rhodium oder Palladium abgeschieden ist. Auch hier eignet sich besonders aktives, gegebenenfalls stabilisiertes Aluminiumoxid.

Der durch Anwendung des beschriebenen Verfahrens formulierte Stickoxidspeicherkatalysator wird in seinen bevorzugten Ausführungsformen auf einem inerten Tragkörper aus Keramik oder Metall aufgebracht. Als Tragkörper für automobile Anwendungen sind Durchflußwabenkörper aus Keramik oder Metall gut geeignet. Insbesondere für den Einsatz in Dieselfahrzeugen ist auch der Einsatz von Wandflußfiltern aus Keramik oder Siliciumcarbid möglich.

Die Erfindung wird im folgenden an Hand einiger Beispiele und Figuren näher erläutert.

Es zeigen:

**Figur 1:** Einlagerung von Schwefeloxiden während der Magerphase bei einem herkömmlichen; Barium-basierten Stickoxidspeicherkatalysator

**Figur 2:** Einlagerung von Schwefeloxiden während der Magerphase bei einem erfindungsgemäßen, Barium-basierten Stickoxidspeicherkatalysator

**Figur 3:** Ermittlung des $NO_x$-Speicherwirkungsgrades

**Figur 4:** Kumulierter Gesamtschwefelaustrag aus dem erfindungsgemäßen Katalysatoren K1 und den Vergleichskatalysatoren VK1 und VK2 nach Beladung mit 1 g Schwefel pro Liter Katalysatorvolumen

**Figur 5:**  Anteil von $SO_2$ und $H_2S$ am Schwefelaustrag aus dem erfindungsgemäßen Katalysatoren K1 nach Beladung mit 1 g Schwefel pro Liter Katalysatorvolumen

**Figur 6:**  $NO_x$-Speicherwirkungsgrad des erfmdungsgemäßen Katalysators K1 und der Vergleichskatalysatoren VK1 und VK2 nach hydrothermaler Alterung bei 750°C über die Dauer von 16 h

**Figur 7:**  Kumulierter Gesamtschwefelaustrag aus dem durch Anwendung des erfindungsgemäßen Verfahrens hergestellten Katalysator K2 und dem Vergleichskatalysators VK3 nach Beladung mit 1 g Schwefel pro Liter Katalysatorvolumen

**Figur 8:**  $NO_x$ Speicherwirkungsgrad des durch Anwendung des erfindungsgemäßen Verfahrens hergestellten Katalysators K2 und des Vergleichskatalysators VK3 nach synthetischer Alterung bei 750°C über die Dauer von 24 h an Luft

## Ermittlung des Speicherwirkungsgrades:

In den folgenden Beispielen und Vergleichsbeispielen wurden komplette Katalysatoren hergestellt und ihr Speicherwirkungsgrad für die Stickoxide in Abhängigkeit von der Abgastemperatur bestimmt. Da der Fokus dieser Untersuchungen auf der Ermittlung der thermischen Alterungsstabilität der hergestellten Katalysatoren lag, wurden die Katalysatoren vor der Vermessung einer synthetischen Alterung unterzogen. Für den erfindungsgemäßen Katalysator K1 und die Vergleichskatalysatoren VK1 und VK2 wurden hydrothermale Alterungsbedingungen gewählt. Sie wurden für die Dauer von 16 Stunden bei 750°C einer Atmosphäre bestehend aus 10 Vol% Sauerstoff und 10 Vol% Wasserdampf in Stickstoff ausgesetzt. Im Unterschied dazu wurden der erfindungsgemäße Katalysator K2 und der Vergleichskatalysator VK3 für die Dauer von 24 Stunden bei 750°C in Luft gelagert.

Der Speicherwirkungsgrad eines Katalysators ist die wichtigste Kenngröße zur Beurteilung seiner Leistungsfähigkeit. Sie beschreibt die Effizienz bezüglich der Entfernung von Stickoxiden aus dem Abgas von Magermotoren.

Der $NO_x$-Speicherwirkungsgrad der Katalysatoren wurde an einer Modellgasanlage ermittelt. Hierzu wurden die Speicherkatalysatoren einem sogenannten Fett/Mager-Zyklus ausgesetzt, das heißt die Katalysatoren wurden abwechselnd von magerem und fettem Abgas durchströmt. Magere Abgaszusammensetzungen wurden durch Zuführen von Sauerstoff bei gleichzeitiger Unterbrechung der Zufuhr von Kohlenmonoxid und Wasserstoff eingestellt. Fette Abgaszusammensetzungen wurden durch die umgekehrte Vorgehensweise erzeugt.

Innerhalb der Magerphase wurden die Stickoxide vom jeweiligen Katalysator gespeichert. Während der Fettphasen wurden die Stickoxide wieder desorbiert und am Katalysator mit den reduktiven Komponenten Kohlenmonoxid, Wasserstoff und Kohlenwasserstoffe des Modellabgases zu Stickstoff, Kohlendioxid und Wasser umgesetzt.

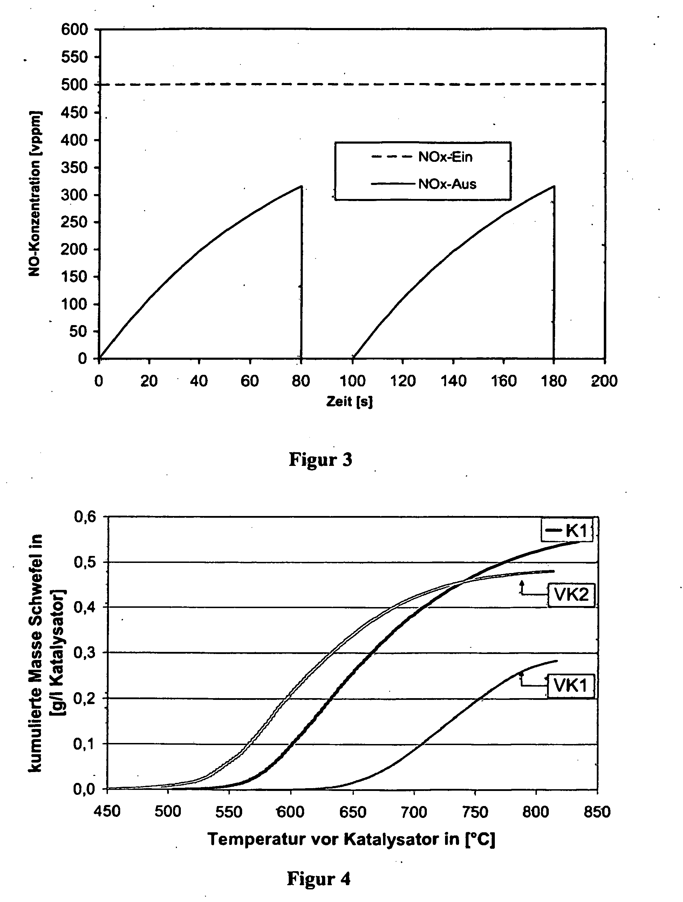

Figur 3 zeigt diese Verhältnisse in idealisierter Weise. Während der Messungen wies das Abgas eine konstante Konzentration von 500 vppm (Volumen ppm) an Stickstoffmonoxid (NO) auf. Die in den Speicherkatalysator eintretende Stickoxidkonzentration (NOx-Ein) wird daher durch die gestrichelte Gerade in Figur 3 wiedergegeben. Die Stickoxidkonzentration hinter dem Speicherkatalysator (NOx-Aus) ist zunächst Null, da der frische Speicherkatalysator im Idealfall alle im Abgas enthaltenen Stickoxide bindet. Mit zunehmender Zeit wird der Speicherkatalysator mit Stickoxiden beladen und seine Speicherkapazität verringert sich. Dadurch werden zunehmend weniger Stickoxide am Speicherkatalysator gebunden, so daß hinter dem Katalysator eine ansteigende Stickoxidkonzentration meßbar wird, die nach vollständiger Absättigung des Speicherkatalysators mit Stickoxiden sich der Eingangskonzentration angleichen würde. Daher muß nach einer gewissen Zeit (in Figur 3 nach 80 Sekunden) die Regeneration des Speicherkatalysators eingeleitet werden. Dies geschieht durch Anfetten des Abgases für die Dauer von etwa 10 Sekunden. Hierdurch werden die gespeicherten Stickoxide desorbiert und im Idealfall am Speicherkatalysator vollständig umgesetzt, so daß während der Regenerationszeit keine Stickoxide hinter dem Speicherkatalysator meßbar sind. Danach wird wieder auf mageres Abgas umgeschaltet und die Einspeicherung von Stickoxiden beginnt von neuem.

Der momentane Speicherwirkungsgrad des Speicherkatalysators ist definiert als das Verhältnis

$$\frac{NO_x\,Ein - NO_x\,Aus}{NO_x\,Ein}.$$

Wie aus Figur 3 ersichtlich ist, ist dieser Wirkungsgrad zeitabhängig. Zur Beurteilung der Speicherkatalysatoren wurde daher der über die jeweilige Speicherphase integrierte Speicherwirkungsgrad S bestimmt:

$$S = \int\limits_{t=0}^{80} \frac{NO_x Ein - NO_x Aus}{NO_x Ein} dt \times 100\,[\%].$$

Der Speicherwirkungsgrad S ist somit keine Materialkonstante, sondern von den Parametern des gewählten Fett/Mager-Zyklusses abhängig.

Für die Ermittlung des Stickoxidspeicherwirkungsgrades als Funktion der Temperatur wurden die Katalysatoren zunächst unter den Modell-Abgasbedingungen auf 600 °C aufgeheizt. Danach wurde die Abgastemperatur während des Durchfahrens der Fett/Mager-Zyklen in einer Temperaturrampe von 600°C bis 150°C kontinuierlich um 7°/min gesenkt. Der Stickstickoxidspeicherwirkungsgrad für einen Meßpunkt wurde für jeden Fett/Mager-Zyklen ermittelt und der mittleren Temperatur des in diesem Zeitraum durchlaufenen Rampenabschnittes zugeordnet.

In den nachstehenden Tabellen sind die Testbedingungen für die Ermittlung des Speicherwirkungsgrades zusammengefaßt.

**Tabelle 1: Abgaszusammensetzung**

| Gaskomponente | Konzentration | |
|---|---|---|
| | während der Magerphase | während der Fettphase |
| CO | 0,0 Vol.% | 4 Vol.-% |
| $H_2$ | 0,0 Vol.-% | 1,3 Vol.-% |
| $O_2$ | 8,0 Vol.-% | 0 Vol.% |
| $C_3H_8$ | 17 vppm | |
| $C_3H_6$ | 33 vppm | |
| NO | 500 vppm | |
| $CO_2$ | 10,0 Vol.-% | |
| $H_2O$ | 10,0 Vol.-% | |
| $N_2$ | Rest | |

**Tabelle 2: Prozeßparameter des Fett/Mager-Zyklus**

| Parameter | während der Magerphase | während der Fettphase |
|---|---|---|
| GHSV | 50000 $h^{-1}$ | |
| T | 600-150 °C in einer kontinuierlichen Temperaturrrampe von 7°/min | |
| λ | 1,5 | 0,88 |
| Dauer | 80 s | 10 s |

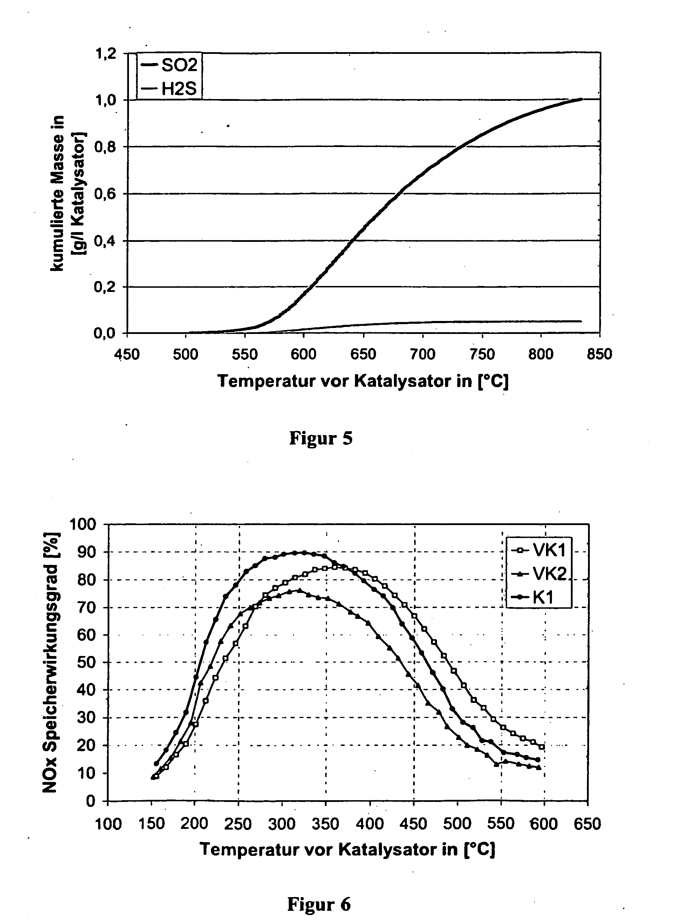

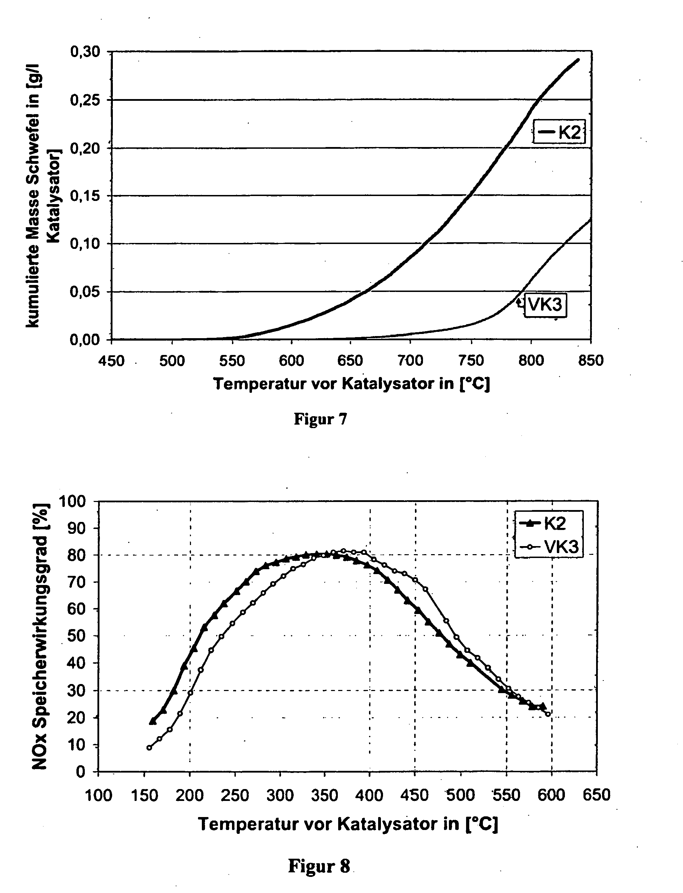

In den Figuren 6 und 8 sind die in dieser Weise ermittelten Speicherwirkungsgrade in Abhängigkeit von der Abgastemperatur für die Stickoxidspeicherkatalysatoren aus den nachstehend beschriebenen Vergleichsbeispielen und den Beispielen aufgetragen.

**Untersuchungen zum Entschwefelungsverhalten**

Neben dem Speicherwirkungsgrad für Stickoxide wurde das Entschwefelungsverhalten der in den folgenden Beispielen und Vergleichsbeispielen beschriebenen Katalysatoren in einer Modellgasanlage untersucht. Dazu wurde der jeweils zu testende Katalysator bei 300°C in einem Modellgas, das die in Tabelle 1 angegebene Zusammensetzung zuzüglich 100 ppm $SO_2$ und einen Volumenstrom von 50.000 1/h aufwies, behandelt.

Diese Verschwefelung wurde durch Schließen der $SO_2$-Zufuhr beendet, sobald die über den Katalysator geleitete Schwefelmenge 1 Gramm pro Liter Katalysatorvolumen, berechnet als Schwefel, betrug. Der Katalysator wurde in einem Modellgas mit der in Tabelle 1 beschriebenen Zusammensetzung mit einer Heizrate von 7,5°C/min in Fett/Mager-Zyklen auf 800°C aufgeheizt, wobei die Länge der Fettphasen 15 Sekunden, die Länge der Magerphasen 5 Sekunden betrug. Während der Aufheizphase wurden der Schwefelwasserstoffgehalt und der Schwefeldioxid-Gehalt des Gases nach Katalysator mit einer geeigneten Analytik bestimmt. Aus diesen Werten wurde der Anteil der desorbierten Schwefel-haltigen Komponenten und die Gesamtmenge des ausgetragenen Schwefel als kumulierte Masse Schwefel bezogen auf das Katalysatorvolumen errechnet. Eine Bildung von COS in signifikanter Menge konnte bei keinem der untersuchten Katalysatoren beobachtet werden.

**Vergleichsbeispiel 1:**

Es wurde ein Stickoxidspeicherkatalysator VK1 nach dem Stand der Technik gemäß der EP 1 317 953 A1 hergestellt. Hierzu wurde zunächst ein Mg/Al-Mischoxid mit Ceroxid durch Imprägnieren mit Cernitrat und anschließendem Calcinieren mit Ceroxid dotiert. Im resultierenden Trägermaterial lagen die oxidischen Komponenten in folgendem Gewichtsverhältnis zueinander vor:

$$Al_2O_3 : MgO : CeO_2 = 72 : 18 : 10$$

Das fertige Material wies eine BET-Oberfläche von 105 $m^2$/g auf. Bei Suspension des Materials in Wasser wurde ein pH-Wert von 9,6 festgestellt.

114 g dieses Materials wurden mit einer wäßrigen Lösung eines wasserlöslichen, chloridfreien Platinprecursors imprägniert, getrocknet und bei 500°C an Luft kalziniert, so daß das fertige Pulver 3,5 g Platin enthielt.

Zur Herstellung eines Stickoxidspeichermaterials wurden 125 g eines stabilisierten Cer-Zirkon-Mischoxids enthaltend 86 Gew.% Ceroxid mit Bariumacetat imprägniert und anschließend bei 500°C für die Dauer von 2 h calciniert. Das fertige Speichermaterial enthielt 25 g Barium, berechnet als Oxid.

Die beiden fertigen Pulver wurden in Wasser suspensdiert, gemahlen und mittels Tauchverfahren auf einen handelsüblichen Wabenkörper aus Cordierit mit 62 Zellen pro Quadratzentimeter und einem Volumen von 1 1 aufgebracht. Der auf diese Weise beschichtete Wabenkörper wurde bei 120°C im Trockenschrank getrocknet. Anschliessend erfolgte eine zweistündige Calcinierung des beschichteten Wabenkörpers bei 500°C.

**Beispiel 1:**

Zur Herstellung des erfindungsgemäßen Katalysators K1 wurde in der in Vergleichsbeispiel 1 beschriebenen Weise eine Platinkomponente hergestellt, die 1,75 g Platin auf 90 g/l des Mg/Al-Mischoxids enthielt.

Zur Herstellung der weniger basischen Platinkomponente wurde als Trägermaterial ein hochporöses, mit 3 Gew.-% Lanthanoxid stabilisiertes Aluminiumoxid mit einer BET-Oberflächevon 100 $m^2$/g eingesetzt, dessen Suspension in Wasser zu einem pH-Wert von 7,6 führt. 34 g dieses Materials wurden mit einer wässrigen Lösung eines wasserlöslichen, chloridfreien Platinprecursors imprägniert, getrocknet und bei 500°C an Luft kalziniert, so daß das fertige Pulver 1,75 g Platin enthielt.

Ein Speichermaterial wurde hergestellt, wie in Vergleichsbeispiel 1 beschrieben.

Dieses wurde gemeinsam mit den beiden Platinkomponenten und 40 g eines unbelegten, stabilisierten Cer-Zirkon-Mischoxides enthaltend 86 Gew.% Ceroxid in Wasser suspendiert, gemahlen und mittels Tauchverfahren auf einen handelsüblichen Wabenkörper aus Cordierit mit 62 Zellen pro Quadratzentimeter und einem Volumen von 1 1 aufgebracht. Der auf diese Weise beschichtete Wabenkörper wurde bei 120°C im Trockenschrank getrocknet. Anschließend erfolgte eine zweistündige Calcinierung des beschichteten Wabenkörpers bei 500°C.

**Vergleichsbeispiel 2:**

Entsprechend der in Vergleichsbeispiel 1 beschriebenen Vorgehensweise wurde ein weiterer Vergleichskatalysator VK 2 hergestellt, der in der Platinkomponente anstelle des Mg/Al-Mischoxides das weniger basische, hochporöse Aluminiumoxid aus dem erfindungsgemäßen Beispiel 1 enthielt.

Die so hergestellte, 3,5 g Platin enthaltende Platinkomponente wurde gemeinsam mit dem in Vergleichsbeispiel 1 und Beispiel 1 beschriebenen Speichermaterial und 70 g eines unbelegten, stabilisierten Cer-Zirkon-Mischoxides enthaltend 86 Gew.-% Ceroxid in Wasser suspendiert, gemahlen und mittels Tauchverfahren auf einen handelsüblichen Wabenkörper aus Cordierit mit 62 Zellen pro Quadratzentimeter und einem Volumen von 1 1 aufgebracht. Der auf diese Weise beschichtete Wabenkörper wurde bei 120°C im Trockenschrank getrocknet. Anschließend erfolgte eine zweistündige Calcinierung des beschichteten Wabenkörpers bei 500°C.

Der erfindungsgemäße Katalysator 1 und die Vergleichskatalysatoren VK1 und VK2 wurden nach dem bereits beschriebenen Prozedere in magerer Gasatmosphäre mit 1 Gramm Schwefel pro Liter Katalysatorvolumen beladen. Anschließend wurden sie unter Fett/Mager-Zyklen auf über 800°C aufgeheizt. Die desorbierenden schwefel-haltigen Abgaskomponenten wurden nach Katalysator mit einer geeigneten Analytik erfaßt.

Figur 4 zeigt den beobachteten kumulierten Schwefelaustrag der drei Katalysatoren als Funktion der Temperatur. Bei dem gemäß EP 1 317 953 A1 hergestellten Katalysator VK1, der nur die stark basische Platinkomponente enthält, beginnt der Schwefelaustrag erst oberhalb von 600°C. Mit dem hier gewählten Entschwefelungsverfahren mit einer Maximaltemperatur von 800°C kann der vom Katalysator in der vorangegangenen Magerphase aufgenommene Schwefel nicht vollständig desorbiert und ausgetragen werden. Im Unterschied dazu beginnt der Schwefelaustrag beim Vergleichskatalysator VK2, der nur die weniger basische Platinkomponente enthält, bereits unterhalb von 500°C und setzt sich über den gesamten untersuchten Temperaturbereich fort. Über die Testdauer wird ein kumulierter Schwefelaustrag erreicht, der deutlich höher ist als bei VK1. Beim erfindungsgemäßen Katalysator K1 beginnt der Schwefelaustrag zwar mit 550°C erst bei leicht höheren Temperaturen als beim Vergleichskatalysator VK2. Im Vergleich zum nach dem Stand der Technik hergestellten Katalysator VK1 ist die Entschwefelungstemperatur jedoch um gut 100° abgesenkt. Zudem zeigen der Kurvenverlauf und die am Ende des Tests erreichte, ausgetragene Schwefelmenge, daß der Schwefel in diesem Katalysator nicht so fest gebunden ist, wie in den beiden anderen Katalysatoren, sich der Katalysator demzufolge bei vergleichsweise geringen Temperaturen am vollständigsten entschwefeln läßt.

Figur 5 zeigt den Anteil an Schwefeldioxid und Schwefelwasserstoff, der während der Entschwefelungsprozedur abgegeben wird. Der Anteil des unangenehm riechenden und giftigen Gases Schwefelwasserstoff ist über den gesamten Temperaturbereich sehr gering. Der desorbierende Schwefel wird überwiegend als $SO_2$ emittiert. Dies entspricht den Anforderungen der Applikation.

Um sicherzustellen, daß die vorgenommenen erfindungsgemäßen Modifizierungen zur Absenkung der Entschwefelungstemperatur die Stickoxidspeicherfähigkeit nicht negativ beeinflussen, wurden die Katalysator K1, VK1 und VK2 einer synthetischen, hydrothermalen Alterung unterzogen. Dazu wurden die Katalysatoren für die Dauer von 16 h bei einer Temperatur von 750°C einer Atmosphäre bestehend aus 10 Vol% Sauerstoff und 10 Vol% Wasserdampf in Stickstoff ausgesetzt. Das Ergebnis der anschließenden Bestimmung der Stickoxidspeicherfähigkeit ist in Figur 6 dargestellt.

Ein Vergleich der Stickoxidspeicherwirkungsgrade von VK1 (□) und VK2 (▲) zeigt, daß der vollständige Austausch des stark basischen Trägeroxids der Platinkomponente aus VK1 gegen das weniger basisches Aluminiumoxid in VK2 zu einem deutlichen Verlust an Stickoxidspeichereffizienz nach Alterung fühlt. Dies ist gleichbedeutend mit einem Verlust an Alterungsstabilität. Der erfindungsgemäße Katalysator K1 zeigt dagegen nach der hydrothermalen Alterung eine sehr gute Stickoxidspeicherwirkung (●). Insbesondere im Tieftemperaturbereich bis 300°C, der für die Anwendung im Unterbodenbereich von Dieselfahrzeugen von besonderer Bedeutung ist, ist die in den Figuren 4 und 5 gezeigte Verbesserung des Entschwefelungsverhaltens im Vergleich zu VK1 begleitet von einer deutlichen Steigerung der Stickoxidspeichereffizienz nach Alterung.

Um zu zeigen, daß das angewandte Verfahren zur Absenkung der Entschwefelungstemperatur unabhängig vom Speichermaterial funktioniert, wurden ein weiterer Vergleichskatalysator und ein weiterer erfindungsgemäßer Katalysator mit einem anderen Stickoxidspeichermaterial hergestellt.

**Vergleichsbeispiel 3:**

Zur Herstellung eines Stickoxidspeichermaterials wurden 125 g eines mit 3 Gew.-% Lanthanoxid stabilisierten Aluminiumoxids mit Bariumacetat imprägniert und anschließend bei 500°C für die Dauer von 2 Stunden calciniert. Das fertige Speichermaterial enthielt 25 g Barium, berechnet als Oxid.

Unter Verwendung dieses Speichermaterials wurde ein Vergleichskatalysator VK3 hergestellt, der in allen anderen Punkten VK 1 entsprach.

**Beispiel 2:**

Der erfindungsgemäße Katalysator K2 wurde entsprechend dem in Beipiel 1 beschriebenen Katalysator K1 hergestellt, wobei das Speichermaterial durch das in Vergleichsbeispiel 3 verwendete Speichermaterial ersetzt wurde.

Beide Katalysatoren wurden zunächst im frisch hergestellten Zustand nach dem bereits beschriebenen Verfahren in magerer Gasatmosphäre bei 300°C mit 1 g Schwefel pro Liter Katalysatorvolumen beladen und anschließend in Fett/Mager-Zyklen, in denen die fette Atmosphäre über die Dauer von 15 Sekunden aufrecht erhalten wurde, während die Magerphase eine Länge von 5 Sekunden aufwies, durch Aufheizen auf 800°C entschwefelt. Figur 7 zeigt die Gesamtmenge des ausgetragenen Schwefels für den durch Anwendung des erfindungsgemäßen Verfahrens entstandenen Katalysator K2 und den dazugehörigen, dem bisherigen Stand der Technik entsprechenden Vergleichskatalysator VK3 als Funktion der Temperatur.

Auch in diesem Fall konnte durch die Anwendung des erfindungsgemäßen Verfahrens die Entschwefelungstemperatur, die bei dem Vergleichskatalysator VK3 oberhalb von 650°C liegt, um gut 100° auf 550°C (K2) gesenkt werden.

In Figur 8 sind außerdem die Stickoxidspeicherwirurigsgrade der Katalysatoren K2 (A) und VK3 (o) nach einer synthetischen Alterung an Luft bei 750°C über die Dauer von 24 Stunden gezeigt. Der maximale Stickoxidspeicherwirkungsgrad beider Katalysatoren liegt im Temperaturbereich 340 bis 380°C bei 80,5 (K2) bzw. 81,5 % (VK3). Die Verbesserung des Stickoxidspeicherwirkungsgrades im Tieftemperaturbereich bis 350°C, die für K2 beobachtet wird und für die Zielapplikation der Katalysatoren an Dieselfahrzeugen, wie beschriebenen, besondere Relevanz hat, ist auf den Zusatz von unbelegtem, stabilisiertem Cer-Zirkon-Mischoxid (vgl. auch K1 aus Beispiel 1) zurückzuführen.

Somit konnte gezeigt werden, daß das erfindungsgemäße Verfahren zur Absenkung der Entschwefelungstemperatur eines Stickoxidspeicherkatalysators enthaltend eine Platinkomponente und wenigstens ein Stickoxidspeichermaterial, durch Absenkung der Basizität der chemischen Umgebung des Platins unabhängig vom eingesetzten Stickoxidspeichermaterial funktioniert.


**Patentansprüche**

1. Verfahren zur Herstellung eines Stickoxidspeicherkatalysators mit abgesenkter, Entschwefelungstemperatur ausgehend von der Rezeptur eines Stickoxidspeicherkatalysators nach dem Stand der Technik enthaltend eine Platinkomponte bestehend aus Platin auf einem hochoberflächigen, hochschmelzenden, oxidischen Trägermaterial A und wenigstens ein Stickoxidspeichermaterial, welches wenigstens eine Stickoxidspeicherkomponente auf einem oder mehreren hochschmelzenden, oxidischen Trägermaterialien enthält,
   **dadurch gekennzeichnet,**
   **daß** die Basizität der chemischen Umgebung des Platins abgesenkt wird, indem mindestens ein Drittel der eingesetzten Platinmenge auf einem hochschmelzenden, hochoberflächigen, oxidischen Trägermaterial B aufgebracht wird, wobei Trägermaterial B weniger basisch ist als Trägermaterial A.

2. Verfahren nach Anspruch 1,
   **dadurch gekennzeichnet,**
   **daß** dem Stickoxidspeicherkatalysator mindestens 5 Gew.% Ceroxid oder Cer-Zirkon-Mischoxid oder ein mit Seltenen Erden dotiertes Ceroxid oder Kombinationen davon bezogen auf die Gesamtmenge der katalytisch aktiven Komponenten zugesetzt wird.

3. Verfahren nach Anspruch 1,
   **dadurch gekennzeichnet,**
   **daß** die Hälfte der eingesetzten Platinmenge auf Trägermaterial B aufgebracht wird.

4. Verfahren nach Anspruch 1,
   **dadurch gekennzeichnet,**
   **daß** das Gewichtsverhältnis von Trägermaterial A zu Trägermaterial B im Bereich 1,5 : 1 bis 5 : 1 liegt.

5. Stickoxidspeicherkatalysator mit abgesenkter Entschwefelungstemperatur enthaltend Platinkomponten, die aus Platin auf hochoberflächigen, hochschmelzenden, oxidischen Trägermaterialien bestehen, und wenigstens ein Stickoxidspeichermaterial, welches wenigstens eine Stickoxidspeicherkomponente auf einem oder mehreren hochschmelzenden, oxidischen Trägermaterialien enthält,
   **dadurch gekennzeichnet,**
   **daß** das Platin jeweils zur Hälfte auf einem stark basischen Trägermaterial und zur anderen Hälfte auf einem weniger basischen Trägermaterial aufgebracht ist und der Stickoxidspeicherkatalysator zusätzlich mindestens 5 Gew.% Ceroxid oder Cer-Zirkon-Mischoxid oder ein mit Seltenen Erden dotiertes Ceroxid oder Kombinationen davon bezogen auf die Gesamtmenge der katalytisch aktiven Komponenten enthält.

6. Stickoxidspeicherkatalysator nach Anspruch 5,
   **dadurch gekennzeichnet,**
   **daß** das Platin zur Hälfte auf einem homogenen Mg/Al-Mischoxid aus Magnesiumoxid und Aluminiumoxid aufgebracht ist, wobei das Magnesiumoxid in einer Konzentration von 5 bis 28 Gew.%, bezogen auf das Gesamtgewicht des Mg/Al-Mischoxids, vorliegt.

7. Stickoxidspeicherkatalysator nach Anspruch 6,
   **dadurch gekennzeichnet,**
   **daß** die Hälfte des Platins auf einem homogenen Mg/Al-Mischoxid aus Magnesiumoxid und Aluminiumoxid aufgebracht ist, wobei das Magnesiumoxid in einer Konzentration von 5 bis 28 Gew.-%, bezogen auf das Gesamtgewicht des Mg/Al-Mischoxids, vorliegt, und die andere Hälfte des Platins auf einem hochoberflächen, temperaturstabilen Aluminiumoxid aufgebracht ist.

8.  Stickoxidspeicherkatalysator nach Anspruch 6 oder 7 ,
    **dadurch gekennzeichnet,**
    **daß** das homogene Ms/Al-Mischoxid, auf dem die Hälfte des Platins aufgebracht ist, mit einem Selten-Erd-Oxid ausgewählt aus der Gruppe Yttriumoxid, Lanthanoxid, Ceroxid, Praseodymoxid oder Neodymoxid oder Kombinationen davon belegt ist.

9.  Stickoxidspeicherkatalysator nach einem der Ansprüche 6 bis 8 ,
    **dadurch gekennzeichnet,**
    **daß** Magnesiumoxid im homogenen Mg/Al-Mischoxid in einer Konzentration von 10 bis 25 Gew.% bezogen auf das Gesamtgewicht des Mischoxids vorliegt.

10. Stickoxidpeicherkatalysator nach einem der Ansprüche 7 bis 9,
    **dadurch gekennzeichnet,**
    **daß** das hochoberflächige, temperaturstabile Aluminiumoxid, auf dem die andere Hälfte des mit einem Selten-Erd-Oxid ausgewählt aus der Gruppe bestehend aus Yttriumoxid, Lanthanoxid, Ceroxid, Praseodymoxid oder Neodymoxid oder Kombinationen davon belegt ist.

11. Stickoxidspeicherkatalysator nach einem der Ansprüche 5 bis 10 ,
    **dadurch gekennzeichnet,**
    **daß** die Stickoxidspeicherkomponenten Oxide, Carbonate oder Hydroxide von Elementen sind, welche ausgewählt sind aus der Gruppe bestehend aus Magnesium, Calcium, Strontium, Barium, den Alkalimetallen, den Selten-ErdMetallen oder Mischungen davon.

12. Stickoxidspeicherkatalysator nach Anspruch 11 ,
    **dadurch gekennzeichnet,**
    **daß** das Trägermaterial für die Stickoxidspeicherkomponenten aus einem oder mehreren temperaturstabilen Metalloxiden besteht.

13. Stickoxidspeicherkatalysator nach Anspruch 12,
    **dadurch gekennzeichnet,**
    **daß** die als Trägermaterial für die Stickoxidspeicherkomponenten eingesetzten temperaturstabilen hochschmelzenden Metalloxide ausgewählt sind aus der Gruppe bestehend aus Ceroxid, Mischoxiden des Cers, Aluminiumoxid, Magnesiumoxid, einem homogenen Mg/Al-Mischoxid mit 5 bis 28 Gew.-% Magnesiumoxid bezogen auf das Gesamtgewicht des Mg/Al-Mischoxids, Calciumtitanat, Stron-tiumtitanat, Bariumtitanat, Bariumaluminat, Bariumzirkonat, Yttriumoxid, Lanthanoxid, Praseodymoxid, Neodymoxid, Samariumoxid, Lanthanmanganat oder Mischungen davon.

14. Stickoxidspeicherkatalysator nach Anspruch 13 ,
    **dadurch gekennzeichnet,**
    **daß** die Stickoxidspeicherkomponenten ein Oxid, Carbonat oder Hydroxid von Strontium oder Barium sind, welche auf einem Trägermaterial aus Ceroxid oder Mischoxiden des Cers fixiert sind.

15. Stickoxidspeicherkatalysator nach Anspruch 14 ,
    **dadurch gekennzeichnet,**
    **daß** als Trägermaterial für die Stickoxidspeicherkomponenten ein Mischoxid des Cers vorliegt, welches mit 0,5 bis 90 Gew.-% mindestens eines Oxids der Elemente ausgewählt aus der Gruppe genildet aus Zirkon, Silicium, Scandium, Yttrium, Lanthan und den Lanthanoiden oder Mischungen davon, bezogen auf das Gesamtgewicht des Speichermaterials, dotiert ist.

16. Stickoxidspeicherkatalysator nach Anspruch 15 ,
    **dadurch gekennzeichnet,**
    **daß** als Trägermaterial für die Stickoxidspeicherkomponenten ein Cer/Zirkon-Mischoxid mit einem Zirkonoxidgehalt von 1 bis 25 Gew.% bezogen auf das Gesamtgewicht des Mischoxids, verwendet wird.

17. Stickoxid-Speicherkatalysator nach Anspruch 16 ,
    **dadurch gekennzeichnet,**

**daß** das als Trägermaterial für die Stickoxidspeicherkomponente eingesetzte Cer/Zirkon-Mischoxid mit 0,5 bis 10 Gew.-% Lanthan und/oder Praseodymoxid, bezogen auf das Gesamtgewicht von Cer/Zirkon-Mischoxid und Lanthanund/oder Praseodymoxid dotiert ist.

**18.** Stickoxidspeicherkatalysator nach einem der Ansprüche 5 bis 10 ,
**dadurch gekennzeichnet,**
**daß** der Katalysator ein weiteres Edelmetall ausgewählt aus der Gruppe Ruthenium, Rhodium, Palladium, Iridium, Gold oder Kombinationen davon enthält.

**19.** Stickoxidspeicherkatalysator nach Anspruch 18 ,
**dadurch gekennzeichnet,**
**daß** auf dem homogenen Mg/Al-Mischoxid Palladium oder Rhodium neben Platin aufgebracht ist.

**20.** Stickoxidspeicherkatalysator nach Anspruch 18 oder 19 ,
**dadurch gekennzeichnet,**
**daß** auf dem Aluminiumoxid Palladium oder Rhodium neben Platin aufgebracht ist.

**21.** Stickoxidspeicherkatalysator nach Anspruch 18,
**dadurch gekennzeichnet,**
**daß** der Katalysator als weiteres Trägermaterial ein aktives, gegebenenfalls stabilisiertes Aluminiumoxid enthält, auf welchem Palladium oder Rhodium abgeschieden ist.

**22.** Stickoxidspeicherkatalysator nach Anspruch 5 ,
**dadurch gekennzeichnet,**
**daß** er in Form einer Beschichtung auf einem inerten Tragkörper aus Keramik oder Metall aufgebracht ist.

**23.** Stickoxidspeicherkatalysator nach Anspruch 22 ,
**dadurch gekennzeichnet,**
**daß** der Tragkörper ein Durchflußwabenkörper aus Keramik ist.

**24.** Stickoxidspeicherkatalysator nach Anspruch 22 ,
**dadurch gekennzeichnet,**
**daß** der Tragkörper ein Wandflußfilter aus Cordierit oder Siliciumcarbid ist.

**25.** Verwendung des Katalysators nach Anspruch 5 zur Reinigung von Abgasen überwiegend mager betriebener Verbrennungsmotoren.

**Claims**

**1.** Process for producing a nitrogen oxide storage catalyst with reduced desulfurization temperature, proceeding from the formulation of a prior art nitrogen oxide storage catalyst comprising a platinum component consisting of platinum on a high-surface area, high-melting oxidic support material A and at least one nitrogen oxide storage material comprising at least one nitrogen oxide storage component on one or more high-melting oxidic support materials,
**characterized in that**
the basicity of the chemical environment of the platinum is lowered by applying at least one third of the amount of platinum used to a high-melting, high-surface area oxidic support material B, support material B being less basic than support material A.

**2.** Process according to Claim 1,
**characterized in that**
at least 5% by weight of cerium oxide or ceriumzirconium mixed oxide or cerium oxide doped with rare earths or combinations thereof, based on the total amount of the catalytically active components, is added to the nitrogen oxide storage catalyst.

**3.** Process according to Claim 1,
**characterized in that**
half of the amount of platinum used is applied to support material B.

**4.** Process according to Claim 1,
**characterized in that**
the weight ratio of support material A to support material B is in the range from 1.5 : 1 to 5 : 1.

**5.** Nitrogen oxide storage catalyst with reduced desulfurization temperature, comprising platinum components consisting of platinum on high-surface area, high-melting oxidic support materials, and at least one nitrogen oxide storage material comprising at least one nitrogen oxide storage component on one or more high-melting oxidic support materials,
**characterized in that**
half of the platinum has been applied to a strongly basic support material and the other half to a less basic support material, and the nitrogen oxide storage catalyst additionally contains at least 5% by weight of cerium oxide or ceriumzirconium mixed oxide or cerium oxide doped with rare earths or combinations thereof, based on the total amount of the catalytically active components.

**6.** Nitrogen oxide storage catalyst according to Claim 5,
**characterized in that**
half of the platinum has been applied to a homogeneous Mg/A1 mixed oxide composed of magnesium oxide and aluminum oxide, the magnesium oxide being present in a concentration of from 5 to 28% by weight, based on the total weight of the Mg/A1 mixed oxide.

**7.** Nitrogen oxide storage catalyst according to Claim 6,
**characterized in that**
half of the platinum has been applied to a homogeneous Mg/A1 mixed oxide composed of magnesium oxide and aluminum oxide, the magnesium oxide being present in a concentration of from 5 to 28% by weight, based on the total weight of the Mg/A1 mixed oxide, and the other half of the platinum has been applied to a high-surface area, thermally stable aluminum oxide.

**8.** Nitrogen oxide storage catalyst according to Claim 6 or 7,
**characterized in that**
the homogeneous Mg/Al mixed oxide to which half of the platinum has been applied has been coated with a rare earth oxide selected from the group of yttrium oxide, lanthanum oxide, cerium oxide, praseodymium oxide or neodymium oxide, or combinations thereof.

**9.** Nitrogen oxide storage catalyst according to any one of Claims 6 to 8,
**characterized in that**
magnesium oxide is present in the homogeneous Mg/A1 mixed oxide in a concentration of from 10 to 25% by weight, based on the total weight of the mixed oxide.

**10.** Nitrogen oxide storage catalyst according to any one of Claims 7 to 9,
**characterized in that**
the high-surface area, thermally stable aluminum oxide to which the other half of the platinum has been applied has been coated with a rare earth oxide selected from the group consisting of yttrium oxide, lanthanum oxide, cerium oxide, praseodymium oxide or neodymium oxide, or combinations thereof.

**11.** Nitrogen oxide storage catalyst according to any one of Claims 5 to 10,
**characterized in that**
the nitrogen oxide storage components are oxides, carbonates or hydroxides of elements selected from the group consisting of magnesium, calcium, strontium, barium, the alkali metals, the rare earth metals and mixtures thereof.

**12.** Nitrogen oxide storage catalyst according to Claim 11,
**characterized in that**
the support material for the nitrogen oxide storage components consists of one or more thermally stable metal oxides.

**13.** Nitrogen oxide storage catalyst according to Claim 12,
**characterized in that**
the thermally stable high-melting metal oxides used as support material for the nitrogen oxide storage components are selected from the group consisting of cerium oxide, mixed oxides of cerium, aluminum oxide, magnesium oxide, a homogeneous Mg/A1 mixed oxide comprising from 5 to 28% by weight of magnesium oxide based on the total weight of the Mg/A1 mixed oxide, calcium titanate, strontium titanate, barium titanate, barium aluminate, barium zirconate, yttrium oxide, lanthanum oxide, praseodymium oxide, neodymium oxide, samarium oxide, lanthanum manganate or mixtures thereof.

**14.** Nitrogen oxide storage catalyst according to Claim 13,
**characterized in that**
the nitrogen oxide storage components are an oxide, carbonate or hydroxide of strontium or barium, which are fixed on a support material composed of cerium oxide or mixed oxides of cerium.

**15.** Nitrogen oxide storage catalyst according to Claim 14,
**characterized in that**
the support material present for the nitrogen oxide storage components is a mixed oxide of cerium which has been doped with from 0.5 to 90% by weight of at least one oxide of the elements selected from the group formed by zirconium, silicon, scandium, yttrium, lanthanum and the lanthanides or mixtures thereof, based on the total weight of the storage material.

**16.** Nitrogen oxide storage catalyst according to Claim 15,
**characterized in that**
the support material used for the nitrogen oxide storage components is a cerium/zirconium mixed oxide with a zirconium oxide content of from 1 to 25% by weight, based on the total weight of the mixed oxide.

**17.** Nitrogen oxide storage catalyst according to Claim 16,
**characterized in that**
the cerium/zirconium mixed oxide used as the support material for the nitrogen oxide storage component has been doped with from 0.5 to 10% by weight of lanthanum and/or praseodymium oxide, based on the total weight of cerium/ zirconium mixed oxide and lanthanum oxide and/or praseodymium oxide.

**18.** Nitrogen oxide storage catalyst according to any one of Claims 5 to 10,
**characterized in that**
the catalyst comprises a further noble metal selected from the group of ruthenium, rhodium, palladium, iridium, gold or combinations thereof.

**19.** Nitrogen oxide storage catalyst according to Claim 18,
**characterized in that**
palladium or rhodium in addition to platinum have been applied to the homogeneous Mg/A1 mixed oxide.

**20.** Nitrogen oxide storage catalyst according to Claim 18 or 19,
**characterized in that**
palladium or rhodium in addition to platinum have been applied to the aluminum oxide.

**21.** Nitrogen oxide storage catalyst according to Claim 18,
**characterized in that**
the catalyst comprises, as a further support material, an active, optionally stabilized aluminum oxide on which palladium or rhodium has been deposited.

**22.** Nitrogen oxide storage catalyst according to Claim 5,
**characterized in that**
it has been applied in the form of a coating on an inert support body composed of ceramic or metal.

**23.** Nitrogen oxide storage catalyst according to Claim 22,
**characterized in that**
the support body is a flow honeycomb composed of ceramic.

**24.** Nitrogen oxide storage catalyst according to Claim 22,
**characterized in that**
the support body is a wall flow filter composed of cordierite or silicon carbide.

**25.** Use of the catalyst according to Claim 5 for cleaning exhaust gases of internal combustion engines operated predominantly under lean burn conditions.

**Revendications**

1. Procédé de fabrication d'un catalyseur-accumulateur d'oxydes d'azote à basse température de désoufrage basé sur la formulation d'un catalyseur-accumulateur d'oxydes d'azote de l'état de la technique et contenant un composant de platine constitué de platine sur un matériau de support A oxydé, à haute température de fusion et à haute surface spécifique et au moins un matériau d'accumulation d'oxydes d'azote qui contient au moins un composant d'accumulation d'oxydes d'azote sur un ou plusieurs matériaux de support oxydés à haute température de fusion,
**caractérisé en ce que**
la basicité de l'environnement chimique du platine est abaissée en appliquant au moins un tiers de la quantité utilisée de platine sur un matériau de support B oxydé, à haute surface spécifique et à haute température de fusion, le matériau de support B étant moins basique que le matériau de support A.

2. Procédé selon la revendication 1, **caractérisé en ce que** l'on ajoute au catalyseur-accumulateur d'oxydes d'azote au moins 5 % en poids d'oxyde de cérium, d'un oxyde mixte de cérium et de zirconium, d'un oxyde de cérium dopé aux terres rares ou de leurs combinaisons par rapport à la quantité totale du composant catalytiquement actif.

3. Procédé selon la revendication 1, **caractérisé en ce que** la moitié de la quantité utilisée de platine est appliquée sur le matériau de support B.

4. Procédé selon la revendication 1, **caractérisé en ce que** le rapport pondéral entre le matériau de support A et le matériau de support B est compris dans la plage de 1,5 : 1 à 5 : 1.

5. Catalyseur-accumulateur d'oxydes d'azote à basse température de désoufrage, contenant un composant de platine constitué de platine sur des matériaux de support oxydés à haute température de fusion et à haute surface spécifique, et au moins un matériau d'accumulation d'oxydes d'azote qui contient au moins un composant d'accumulation d'oxydes d'azote sur un ou plusieurs matériaux de support oxydés à haute température de fusion,
**caractérisé en ce que**
le platine est appliqué pour moitié sur un matériau de support fortement basique et pour l'autre moitié sur un matériau de support moins basique et
**en ce que** le catalyseur-accumulateur d'oxydes d'azote contient en supplément au moins 5 % en poids d'oxyde de cérium, d'un oxyde mixte de cérium et de zirconium, d'un oxyde de cérium dopé aux terres rares ou d'une de leurs combinaisons par rapport à la quantité totale des composants catalytiquement actifs.

6. Catalyseur-accumulateur d'oxydes d'azote selon la revendication 5, **caractérisé en ce que** le platine est appliqué pour moitié sur un oxyde mixte homogène de MgAl constitué d'oxyde de magnésium et d'oxyde d'aluminium, l'oxyde de magnésium étant présent à une concentration de 5 à 28 % en poids par rapport au poids total de l'oxyde mixte de Mg et d'Al.

7. Catalyseur-accumulateur d'oxydes d'azote selon la revendication 6, **caractérisé en ce que** la moitié du platine est appliquée sur un oxyde mixte homogène de Mg et d'A1 constitué d'oxyde de magnésium ou d'oxyde d'aluminium, l'oxyde de magnésium étant présent à une concentration de 5 à 28 % en poids par rapport au poids total de l'oxyde mixte de Mg et d'A1, l'autre moitié du platine étant appliquée sur un oxyde d'aluminium à haute surface spécifique et stable aux hautes températures.

8. Catalyseur-accumulateur d'oxydes d'azote selon les revendications 6 ou 7, **caractérisé en ce que** l'oxyde mixte homogène de Mg et d'A1 sur lequel la moitié du platine est appliquée est occupée par un oxyde de terres rares sélectionné dans l'ensemble constitué de l'oxyde d'yttrium, de l'oxyde de lanthane, de l'oxyde de cérium, de l'oxyde de praséodyme, de l'oxyde de néodyme et de leurs combinaisons.

9. Catalyseur-accumulateur d'oxydes d'azote selon l'une des revendications 6 à 8, **caractérisé en ce que** l'oxyde de magnésium est présent dans l'oxyde mixte homogène de Mg et d'Al à une concentration de 10 à 25 % en poids par rapport au poids total de l'oxyde mixte.

10. Catalyseur-accumulateur d'oxydes d'azote selon l'une des revendications 7 à 9, **caractérisé en ce que** l'oxyde d'aluminium à haute surface spécifique et stable aux hautes températures sur lequel l'autre moitié du platine est appliquée est occupé par un oxyde de terres rares sélectionné dans l'ensemble constitué de l'oxyde d'yttrium, de l'oxyde de lanthane, de l'oxyde de cérium, de l'oxyde de praséodyme, de l'oxyde de néodyme et de leurs combinaisons.

11. Catalyseur-accumulateur d'oxydes d'azote selon l'une des revendications 5 à 10, **caractérisé en ce que** les composants d'accumulation d'oxydes d'azote sont des oxydes, des carbonates ou des hydroxydes d'éléments sélectionnés dans l'ensemble constitué du magnésium, du calcium, du strontium, du baryum, des métaux alcalins, des métaux des terres rares et de leurs mélanges.

12. Catalyseur-accumulateur d'oxydes d'azote selon la revendication 11, **caractérisé en ce que** le matériau de support des composants d'accumulation d'oxydes d'azote est constitué d'un ou de plusieurs oxydes métalliques stables aux hautes températures.

13. Catalyseur-accumulateur d'oxydes d'azote selon la revendication 12, **caractérisé en ce que** les oxydes métalliques à haute température de fusion et stables aux hautes températures utilisés comme matériau de support pour les composants d'accumulation d'oxydes d'azote sont sélectionnés dans l'ensemble constitué de l'oxyde de cérium, des oxydes mixtes de cérium, de l'oxyde d'aluminium, de l'oxyde de magnésium, d'un oxyde mixte homogène de Mg et d'A1 qui compte de 5 à 28 % en poids d'oxyde de magnésium par rapport au poids total de l'oxyde mixte de Mg et d'A1, du titanate de calcium, du titanate de strontium, du titanate de baryum, de l'aluminate de baryum, du zirconate de baryum, de l'oxyde d'yttrium, de l'oxyde de lanthane, de l'oxyde de praséodyme, de l'oxyde de néodyme, de l'oxyde de samarium, du manganate de lanthane et de leurs mélanges.

14. Catalyseur-accumulateur d'oxydes d'azote selon la revendication 13, **caractérisé en ce que** les composants d'accumulation d'oxydes d'azote sont un oxyde, carbonate ou hydroxyde de strontium ou de baryum qui sont fixés sur un matériau de support constitué d'oxyde de cérium ou d'oxydes mixtes du cérium.

15. Catalyseur-accumulateur d'oxydes d'azote selon la revendication 14, **caractérisé en ce qu'**il présente comme matériau de support pour les composants d'accumulation d'oxydes d'azote un oxyde mixte du cérium qui est dopé par 0,5 à 90 % en poids d'au moins un oxyde des éléments sélectionnés dans l'ensemble constitué du zirconium, du silicium, du scandium, de l'yttrium, du lanthane et des lanthanides ou de leurs mélanges, par rapport au poids total du matériau d'accumulation.

16. Catalyseur-accumulateur d'oxydes d'azote selon la revendication 15, **caractérisé en ce que** l'on utilise comme matériau de support pour les composants d'accumulation des oxydes d'azote un oxyde mixte de cérium et de zirconium dont la teneur en oxyde de zirconium est comprise entre 1 et 25 % en poids par rapport au poids total de l'oxyde mixte.

17. Catalyseur-accumulateur d'oxydes d'azote selon la revendication 16, **caractérisé en ce que** l'oxyde mixte de cérium et de zirconium utilisé comme matériau de support pour le composant d'accumulation d'oxydes d'azote est dopé par 0,5 à 10 % en poids d'oxyde de lanthane et/ou d'oxyde de praséodyme par rapport au poids total de l'oxyde mixte de cérium et de zirconium et de l'oxyde de lanthane et/ou de l'oxyde de praséodyme.

18. Catalyseur-accumulateur d'oxydes d'azote selon l'une des revendications 5 à 10, **caractérisé en ce que** le catalyseur contient un autre métal précieux sélectionné dans l'ensemble constitué du ruthénium, du rhodium, du palladium, de l'iridium, de l'or et de leurs combinaisons.

19. Catalyseur-accumulateur d'oxydes d'azote selon la revendication 18, **caractérisé en ce qu'**en plus du platine, du palladium ou du rhodium sont appliqués sur l'oxyde mixte homogène de Mg et d'A1.

20. Catalyseur-accumulateur d'oxydes d'azote selon les revendications 18 ou 19, **caractérisé en ce qu'**en plus du platine, du palladium ou du rhodium sont appliqués sur l'oxyde d'aluminium.

21. Catalyseur-accumulateur d'oxydes d'azote selon la revendication 18, **caractérisé en ce que** comme autre matériau de support, le catalyseur contient un oxyde d'aluminium actif, éventuellement stabilisé, sur lequel du palladium ou du rhodium ont été déposés.

22. Catalyseur-accumulateur d'oxydes d'azote selon la revendication 5, **caractérisé en ce qu'**il est appliqué sous la forme d'un revêtement sur un corps de support inerte constitué de céramique ou de métal.

**23.** Catalyseur-accumulateur d'oxydes d'azote selon la revendication 22, **caractérisé en ce que** le corps de support est un corps d'écoulement en nid d'abeilles constitué de céramique.

**24.** Catalyseur-accumulateur d'oxydes d'azote selon la revendication 22, **caractérisé en ce que** le corps de support est un filtre d'écoulement sur parois en cordiérite ou en carbure de silicium.

**25.** Utilisation du catalyseur selon la revendication 5 pour l'épuration de gaz d'échappement de moteurs à combustion interne utilisés principalement en conditions pauvres.

**SO₂**

½ O₂

CO₂

BaCO₃
↓
SO₂(ads)   SO₂(ads)   **Pt**   SO₃(ads)   **BaSO₄**

**Trägermaterial A**

**Figur 1**

**SO₂**

½ O₂   SO₃

CO₂

BaCO₃
↓
SO₂(ads)   SO₂(ads)   **Pt**   SO₃(ads)   BaSO₄ +
**BaSO₃**

**Trägermaterial A + Trägermaterial B**

**Figur 2**

**Figur 3**

**Figur 4**

**Figur 5**

**Figur 6**

Figur 7

Figur 8

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- EP 1317953 A1
- WO 2005092481 A
- EP 1016448 B1
- EP 1321186 B1
- EP 1304156 A1
- US 20050164879 A1